# EUROPÄISCHE PATENTANMELDUNG

(11) **EP 0 785 426 A1**
(43) Veröffentlichungstag der Anmeldung: **23.07.1997**
(21) Anmeldenummer: 96250287.8
(22) Anmeldetag: 11.12.1996
(51) Int. Cl.: G01N 29/24, B06B 1/04

(54) **Prüfkopf zur zerstörungsfreien Prüfung**

(30) Priorität: 21.12.1995 DE 19549207
(71) Anmelder: MANNESMANN Aktiengesellschaft, 40213 Düsseldorf (DE)
(72) Erfinder: Arzt, Norbert, Dipl.-Ing., 41469 Neuss (DE); Graff, Alfred, Dipl.-Phys., 45239 Essen (DE)
(74) Vertreter: Meissner, Peter E., Dipl.-Ing.

(57) **Zusammenfassung**

Die Erfindung betrifft einen Prüfkopf zur zerstörungsfreien Prüfung von relativ dazu sich bewegenden Werkstücken mit mindestens einer auf einer Trägerplatte angeordneten Sonde, die aus einem einen rechteckigen Querschnitt mit trapezförmigen Schrägen aufweisenden Magnetfeldkonzentrator besteht, auf deren dem Werkstück zugewandten Flachseite ein aus einer übereinanderliegenden Sende- und Empfangsspule bestehendes Spulensystem befestigt ist, wobei die Mantelfläche der Sonde von einem mit der Trägerplatte verbindbaren Rahmen umgeben ist und im sondenfreien Endenbereich des Prüfkopfes in einer mit der Trägerachse lösbar verbundenen Halterung je ein in der Höhe verstellbarer und in der Halterung verschiebbarer großflächiger Gleitstein angeordnet ist gekennzeichnet durch die Kombination folgender Merkmale:
a) Der Magnetfeldkonzentrator (20) besteht aus einem an sich bekannten weichmagnetischen Pulververbundwerkstoff mit geringer elektrischer Leitfähigkeit.
b) Das Verschleißschutzelement (26) besteht in an sich bekannter Weise aus einem faserverstärkten laminierten Werkstoff und ist als separates Formteil mit einem hutförmigen Querschnitt ausgebildet.
c) Die Schrägen und gegebenenfalls die dem Werkstück zugewandte Stirnfläche des Magnetfeldkonzentrators (20) weisen mindestens je eine Sacklochbohrung (35,35', 36-36"', 37-37"') auf.
d) Die Sonde(n) (13,14) sowie das Verschleißschutzelement (26) werden mittels des Rahmens (3) auf der Trägerplatte (2) zur Anlage gebracht und fixiert.
e) Die Halterung ist als Formstück (4,5) aus Metall ausgebildet, das eine dem einen schwalbenschwanzförmigen Querschnitt aufweisenden Gleitstein (10,11) entsprechende Ausnehmeung aufweist und die äußere Kontur des Formstückes (4,5) so ausgebildet ist, daß es einen bündigen Abschluß zum Rahmen (3) bildet.

## Beschreibung

Die Erfindung betrifft einen Prüfkopf zur zerstörungsfreien Prüfung von relativ dazu sich bewegenden Werkstücken mit mindestens einer auf einer Trägerplatte angeordneten Sonde gemäß dem Gattungsbegriff des Hauptanspruches.

Ein gattungsmäßiger Prüfkopf ist aus der DE-4002100 A1 bekannt. Dieser weist eine rechteckige Trägerplatte auf, auf der mindestens eine Sonde mittels Schrauben befestigt ist. Die Sonde besteht aus einem Magnetfeldkonzentrator, der einen rechteckigen Querschnitt mit trapezförmigen Schrägen aufweist. Auf der dem Werkstück zugewandten Flachseite ist ein aus einer Sende- und Empfangsspule bestehendes Spulensystem angeordnet, das durch eine aus einer Vergußmasse hergestellte Kunststoffkappe auf dem Magnetfeldkonzentrator befestigt ist. Zur Fixierung der Vergußmasse auf der Schräge weist diese treppenartige Profilierungen auf. Zum Schutz des Spulensystems ist die Flachseite der Vergußmasse mit einer vorzugsweise aus Keramik bestehenden Schutzplatte abgedeckt. Die Drähte des Spulensystems werden durch mehrere im Magnetfeldkonzentrator angeordnete Bohrungen geführt und mit den auf der Unterseite des Magneffeldkonzentrators angeordneten Steckern verbunden. Die einzelne Sonde bzw. die entlang einer Gerade angeordneten Sonden werden von einer einen Ausschnittbereich aufweisenden Kappe umgeben, die mit der Trägerplatte fest verbunden ist. In den Endenbereichen der Kappe sind je zwei überstehende Gleitsteine mittels Nieten befestigt. Die Höhe der Gleitsteine kann mittels unterlegbarer dünner Bleche eingestellt werden.

Dieser Prüfkopf hat den Nachteil, daß er in seiner Herstellung sehr aufwendig ist und das Auswechseln verschlissener Gleitsteine große Probleme bereitet. Außerdem wird der Schutz des Spulensystems mittels einer Keramikplatte als nicht optimal angesehen.

Was den letzten Problempunkt betrifft, ist aus der DE-4304548 A1 ein Formteil bekannt, das aus einem faserverstärkten laminierten Werkstoff hergestellt wird. Es weist vorzugsweise einen hutförmigen Querschnitt auf und kann mittels der an sich bekannten Kappe auf den Sondenkörper geklemmt werden. Der Vorteil dieses Verschleißschutzelementes liegt in seiner Nachgiebigkeit und der einfachen Möglichkeit eines Auswechselns bei Verschleiß.

Ein weiterer gattungsähnlicher Prüfkopf ist aus der DE 4343745 A1 bekannt. Im Unterschied zu der vom gleichen Anmelder in der DE 4002100 A1 offenbarten Vorrichtung sind in den Endbereichen der Kappe statt zwei beabstandet voneinander angeordneter Gleitsteine ein großflächiger Gleitstein vorgesehen. Die Gleitsteine haben in etwa eine Quaderform und sind in nicht dargestellten Haltern form- und kraftschlüssig befestigt. Ein weiterer Unterschied betrifft die Befestigung der die Sonden abdeckenden Schutzplatte. Statt mit Z-förmig ausgebildeten Haltern wird in der DE 4343745 vorzugsweise die Schutzplatte direkt mit der Vergußmasse verklebt und zwar so, daß die dem zu prüfenden Werkstück zugewandte Seite der Schutzplatte bündig zur Oberfläche der angrenzenden Kappe liegt.

In der G 92 16 927.9 ist eine Tragvorrichtung für Sonden zur zerstörungsfreien Prüfung von Werkstücken offenbart. Sie besteht aus einer Basisplatte mit darauf angeordneten Sonden und mit neben den Sonden angeordneten Gleitelementen, die sich bei einer Relativbewegung zwischen der Tragvorrichtung und den Werkstücken ggf. auf diesen abstützen. Die Gleitelemente sind auf der der Gleitfläche abgewandten Seite mit Füßen versehen und form- und kraftschlüssig, aber in Längsrichtung verschiebbar mit einem die Füße umgreifenden Halter verbunden. Der Halter ist auswechselbar an der Basisplatte befestigt. Die Halter sind in Aussparungen einer Kappe eingefügt, die an der Basisplatte befestigt ist. Die Gleitelemente schließen mit den Haltern jeweils bündig mit den Stirnseiten der Kappe ab, wobei den stirnseitigen Abschluß eine an der Stirnseite der Kappe befestigbare Platte bildet.

Aufgabe der Erfindung ist es, ausgehend von dem bekannten Prüfkopf gemäß DE-4002100 A1 eine verbesserte Konstruktion vorzuschlagen, die einfacher und damit kostengünstiger herstellbar ist, weniger Teile, insbesondere Sonden benötigt und mit der die verschlissenen Gleitsteine schnell und unproblematisch ausgewechselt sowie unterfüttert werden können. Außerdem soll der neuentwickelte Prüfkopf einen besseren Nutz-Störabstand und eine längere Standzeit aufweisen. Darüber hinaus soll der Prüfkopf vielseitiger einsetzbar sein.

Diese Aufgabe wird mit einer Kombination der im kennzeichnenden Teil angegebenen Merkmale gelöst. Vorteilhafte Weiterbildungen sind Bestandteil von Unteransprüchen.

Die genannten Maßnahmen wirken alle in der Weise zusammen, daß der Herstellaufwand für die Sonde gesenkt und damit die Kosten reduziert werden. Die Verwendung des an sich bekannten Eisenpulver-Verbundwerkstoffes, z. B. _{"}Corovac" der Firma Vakuumschmelze für die Herstellung des Magnetfeldkonzentrators bringt Vorteile hinsichtlich der Materialkosten und der guten Bearbeitbarkeit. Die bisher übliche aufwendige Anbringung von schmalen Schlitzen im Magnetfeldkonzentrator zur Wirbelstromunterdrückung ist nicht erforderlich. Eine weitere Maßnahme betrifft die Verankerung der als Kunststoffkappe ausgebildeten Vergußmasse auf dem Magnetfeldkonzentrator. Anstatt der üblichen treppenartigen Profilierung der 45°-Schrägen werden in diese erfindungsgemäß mindestens je eine Sacklochbohrung, vorzugsweise zwei Sacklochbohrungen angeordnet. Diese Sacklochbohrungen sind in kurzer Zeit und einfacher anzubringen als die aufwendige treppenartige Profilierung. Bei flächenmäßig größeren Sonden werden darüber hinaus zusätzlich auf der dem Werkstück zugewandten Stirnseite ebenfalls Sacklochbohrungen angebracht. Bei der Sonde nach dem Stand der Technik war eine Vielzahl von Durchgangsbohrungen im Magnetfeldkonzentrator erforderlich, um die Drähte der Spulen mit dem auf der Unterseite des Magnetfeldkonzentrators angeordneten Steckern zu verbinden. Erfindungsgemäß sind diese Bohrungen durch eine zentrale Bohrung ersetzt worden. Auch diese Maßnahme verringert den Herstellaufwand. Auch die Fixierung der Sonde auf der Trägerplatte wurde dahingehend geändert, daß die separate Befestigung der Sonde auf der Trägerplatte mittels Schrauben weggelassen und statt dessen der Rahmen als Klemmittel benutzt wird. Im Sinne einer ausreichenden Fixierung der Sonden wirken zusätzlich noch die Stecker und die Schutzkappe.

Die vorgeschlagene Befestigung der Sonden auf der Trägerplatte hat den Vorteil, daß dies zu einer Verbesserung der Magnetisierung der Platte und damit auch der Sonden führt. Diese Verbesserung schlägt sich nieder in einem günstigeren Nutz-Störabstand. Die Anzahl der Sonden, die auf einem Prüfkopf angeordnet werden, ist abhängig von der Prüfaufgabe und von der gewünschten Prüfgeschwindigkeit. Da die Anzahl ganz wesentlich die Herstellkosten für den Prüfkopf beeinflußt, ist man bestrebt diese bei gleicher Prüfleistung so gering wie möglich zu halten. Erfindungsgemäß'wird dazu vorgeschlagen anstatt der bisher üblichen kreisrund gewickelten Spulen eine in der Draufsicht gesehen ovale Form vorzusehen. In erster Näherung entspricht dabei eine Spule ovaler Form zwei Spulen mit kreisrunder Form, so daß mit dieser Maßnahme die Anzahl der Sonden halbiert werden kann. Außerdem verringert sich entsprechend der Elektronik-Aufwand, da statt zwei Spulen nur eine Spule angesteuert wird. Ordnet man darüber hinaus mehrere nebeneinanderliegende Spulen auf einem langgestreckten Magnetfeldkonzentrator an, dann verringert sich der Herstellaufwand noch weiter.
Um den Prüfkopf vielseitig verwenden zu können, wird außerdem vorgeschlagen, verschieden große Sende- und Empfangsspulen einzusetzen, beispielsweise in der Weise, daß das Spulensystem aus einer großen Sendespule und zwei kleineren Empfangsspulen besteht.

Für den Schutz der Sonden vor unmittelbarer Berührung des relativ sich bewegenden Werkstückes war es bisher üblich an beiden Enden der Trägerplatte je zwei Gleitsteine anzuordnen. Diese Gleitsteine waren mit Nieten an der Trägerplatte befestigt. Bei jedem Wechsel bzw. Unterfütterung zur Einstellung der Höhe der Gleitsteine war eine Zerstörung des Niets und ein erneutes Nieten erforderlich. Der Zeitaufwand für die Einstellung der Höhe bzw. ein Auswechseln der Gleitsteine war entsprechend hoch. Nach einem weiteren Stand der Technik sind diese zwei Gleitsteine durch einen eine größere Gleitfläche aufweisenden Gleitstein ersetzt worden. Erfindungsgemäß weist dieser einen schwalbenschwanzförmigen Querschnitt auf und ist in einem eine entsprechende Ausnehmung aufweisenden Formstück aus Metall angeordnet. Das Formstück ist über Schrauben auswechselbar mit der Trägerplatte verbunden. Durch einfaches Abschrauben des jeweiligen Formstückes von der Trägerplatte und Herausschieben des Gleitsteines kann dieser in einfacher Weise ausgewechselt werden. Außerdem können unter das Formstück Unterlegscheiben angebracht werden, um den verschlissenen Gleitstein höher zu setzen. Der Vorteil der Anordnung eines separaten Formstückes ist darin zu sehen, daß erstens jedes Ende unabhängig voneinander eingestellt werden kann und zweitens das Formstück selbst mit als Verschleißteil verwendet werden kann, ohne daß der Befestigungsrahmen in Mitleidenschaft gezogen wird.

Eine weitere Aufgabe bestand darin, den Nutz-Störabstand der Sonde zu verbessern. Eine Maßnahme dazu ist die Verwendung des Eisenpulver-Verbundwerkstoffes _{"}Corovac" für den Magnetfeldkonzentrator. Dieser Werkstoff verbindet die Eigenschaften hoher magnetischer Sättigungsinduktion mit geringer elektrischer Leitfähigkeit. Die Wirbelstromanregung durch die Sendespule im Konzentrator besitzt damit prüftechnisch keine Relevanz mehr. Das Sondensystem kann deshalb sehr nahe am Konzentrator plaziert werden, um damit die notwendig hohe Magnetfeldstärke am Prüfobjekt zu erreichen, d. h. der Nutz-Störabstand der Signale verbessert sich.

Im Unterschied zum bekannten Stand der Technik sind beim erfindungsgemäßen Prüfkopf auch die Empfangsspulen aus Kupferdraht gewickelt. Dies hat den Vorteil, daß über einen einfachen Dämpfungswiderstand das Senderübersprechen und der Nutz-Störabstand beeinflußt werden kann. Der Dämpfungswiderstand ist in der Trägerplatte angeordnet, wobei je nach Prüfaufgabe verschiedene Widerstände eingesetzt werden können. Diese Wahlmöglichkeit ist insbesondere bei unterschiedlichen Materialdicken des zu prüfenden Objektes von besonderer Bedeutung. In vorteilhafter Weise werden deshalb in den Trägerplatten Dämpfungswiderstände mit unterschiedlichen Dämpfungscharakteristiken integriert, so daß dieselben Sonden mit verschiedenen Widerständen in Abhängigkeit von der jeweiligen Trägerplatte verknüpft werden können und damit der mögliche Einsatzbereich erheblich vergrößert wird. Auch der Werkstoff der eine Kunststoffkappe bildende Vergußmasse hat Auswirkungen auf die Prüfqualität. Die Ausschwinger hinter den Senderübersprechen im Hochfrequenzbild, hervorgerufen durch die Verwendung einer normalen Epoxi-Vergußmasse können eine Prüfung beispielsweise dünnwandiger Rohre unmöglich machen. Silikonvergossene Sonden hingegen sind prüftechnisch optimal, jedoch ist die mechanische Belastbarkeit dieser Sonden nicht besonders hoch. Alternativ wird deshalb eine Kunststoffvergußmasse gewählt, die vorzugsweise keramische, metallene oder andere Füllstoffe enthält. Die Dauerbetriebstemperatur dieser modifizierten Vergußmasse liegt wesentlich höher als übliche Vergußmassen ohne Füllstoff. Die Standzeiten sind sogar höher als rein keramische Vergußmassen, da diese Vergußmassen schnell altern und zur Rißbildung neigen.

Ein entscheidender Parameter für die Standzeit des Prüfkopfes insgesamt ist der Abstand der Sonde von der Oberfläche des zu prüfenden Objektes. Einerseits ist es notwendig, die Sonden so nahe wie nur möglich an der Werkstoffoberfläche zu führen, damit die Echosignale sicher ausgewertet werden können, andererseits ist, im Interesse hoher Standzeiten, der Abstand Sonde-Werkstück so groß wie möglich zu wählen. Mit dem höheren Nutz-Störabstand durch die zuvor beschriebenen Maßnahmen und in Abhängigkeit vom Dämpfungswiderstand ist ein Abstand bis zu 2,0 mm möglich. Dies bedeutet, daß nach Neueinsatz die Gleitsteine um bis zu 1,0 mm abgeschliffen werden können, bis eine Nachfütterung bzw. ein Auswechseln erforderlich ist.

In der Zeichnung wird anhand eines Ausführungsbeispieles der erfindungsgemäße Prüfkopf näher erläutert.

Es zeigen:
- Figur 1: eine prüfseitige Draufsicht des erfindungsgemäßen Prüfkopfes mit Teilaufbruch
- Figur 2: einen halbseitigen Schnitt A-B und eine halbseitige Ansicht in Richtung Y in Fig. 1
- Figur 3: eine Explosionsdarstellung in Richtung C-D in Figur 1
- Figur 4a: in einer prüfseitigen Draufsicht als Einzelteil der Rahmen
- Figur 4b: eine Ansicht in Richtung X₁ in Figur 4a
- Figur 4c: eine Seitenansicht in Richtung X₂ in Fig. 4a
- Figur 5a: in einer Vorderansicht und im Teilaufbruch als Einzelteil die Sonde
- Figur 5b: eine Draufsicht in Richtung Z in Fig. 5a
- Figur 5c: eine Variante als Draufsicht in Richtung Z in Fig. 5a
- Figur 6: einen Schnitt entlang E-F in Figur 1.

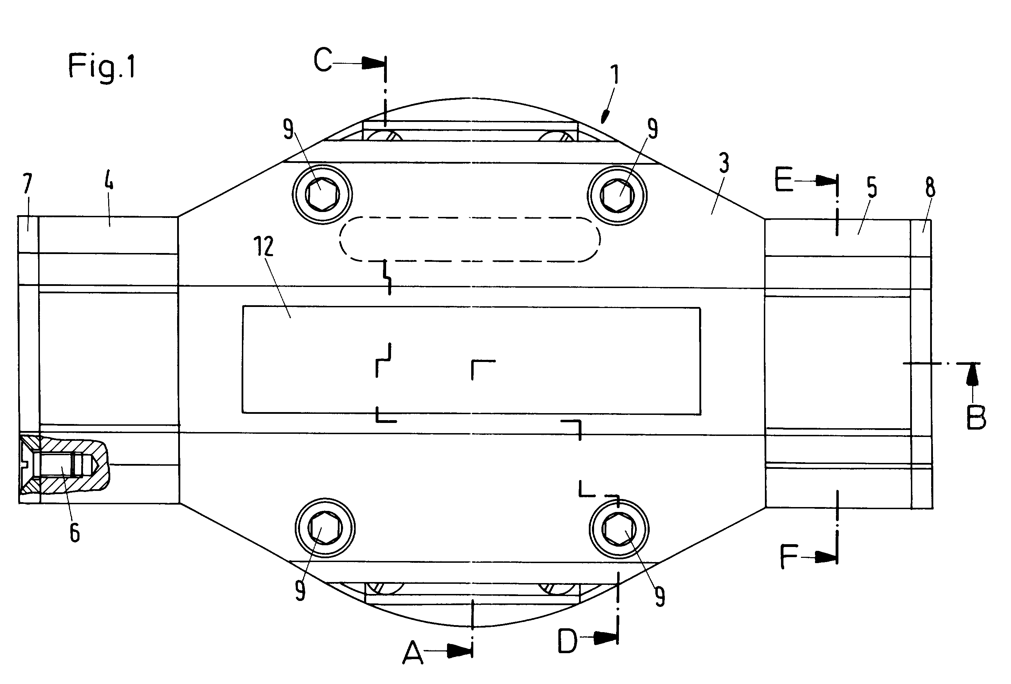

Figur 1 zeigt eine prüfseitige Draufsicht des erfindungsgemäßen Prüfkopfes 1 mit einem Teilaufbruch. Der Prüfkopf 1 besteht im wesentlichen aus einer Trägerplatte 2, einem Rahmen 3 sowie zwei mit der Trägerplatte 2 verbundene Formstücke 4,5. Den seitlichen Abschluß bildet eine mit dem Formstück 4 bzw. 5 über Schrauben 6 verbundene Haltescheibe 7,8. Der Rahmen 3 wiederum ist über Schrauben 9 mit einer hier nicht dargestellten Prüfkopfaufnahme verbunden.

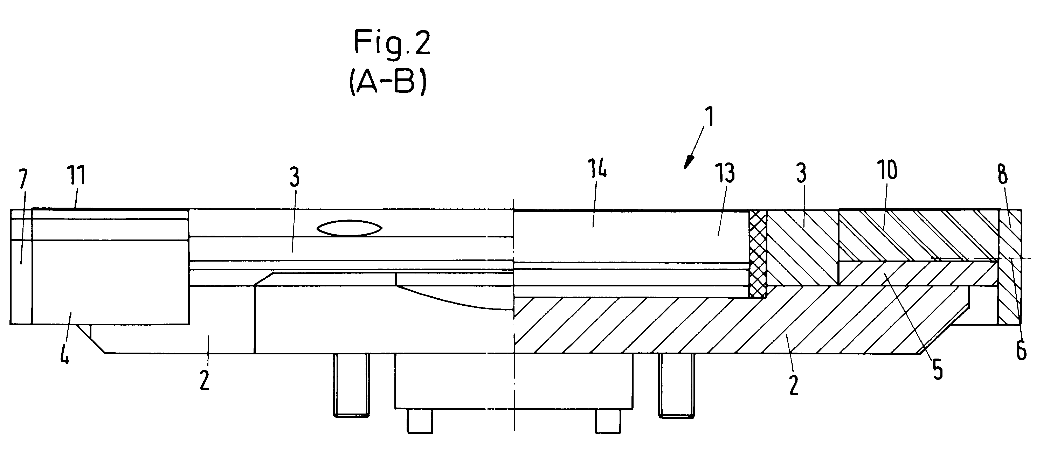

Figur 2 zeigt in der rechten Hälfte einen Schnitt A-B und in der linken Hälfte eine Ansicht in Richtung Y in Figur 1. In diesem Schnitt ist die Anordnung des großflächigen Gleitsteins 10,11 im jeweiligen Endbereich des Prüfkopfes 1 zu erkennen. Den seitlichen Abschluß bilden, wie schon zuvor erwähnt, die beiden Haltescheiben 7,8. Im Ausschnitt 12 (Figur 1) des Rahmens 3 sind beispielsweise vier Sonden angeordnet. Zwei davon 13,14 sind im halbseitigen Schnitt zu erkennen.

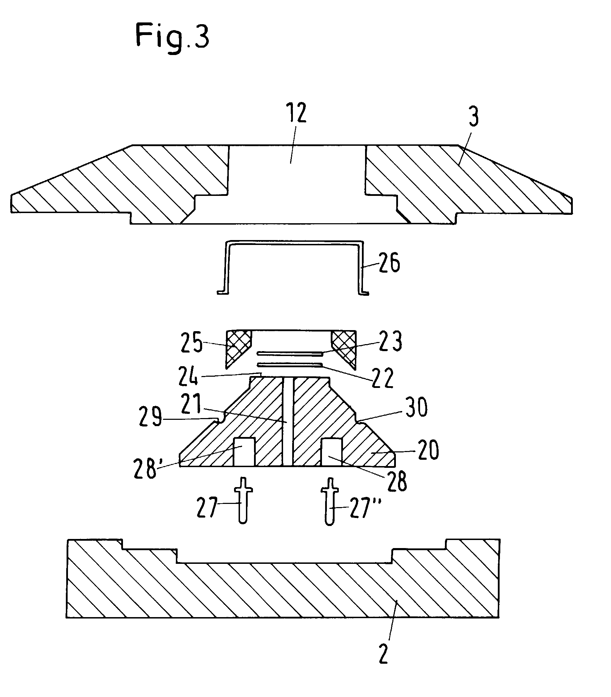

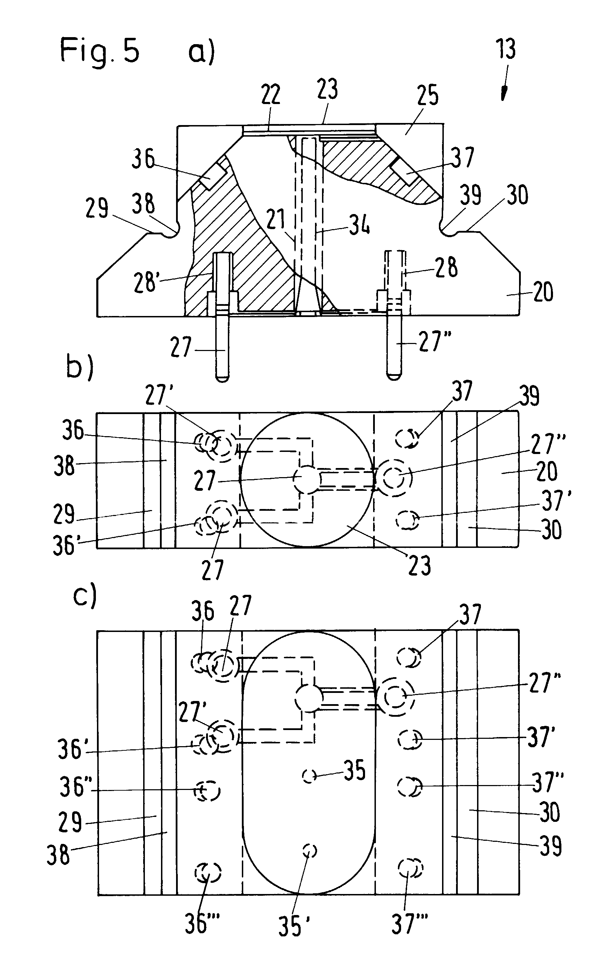

Eine Explosionsdarstellung in Richtung C-D in Figur 1 zeigt Figur 3. In dieser Darstellung sind die Einzelheiten einer Sonde erläutert. Sie weist einen aus einem Eisenpulver-Verbundwerkstoff hergestellten Magnetfeldkonzentrator 20 auf. Er hat im Querschnitt die Form eines gleichschenkligen Trapezes und ist mit einem zentralen Kanal 21 für die Zuführung der Kabel zu den beiden Flachspulen 22,23 versehen. Beide Spulen 22,23 sind aus Kupferdraht gewickelt, wobei die einzelnen Windungen mittels eines Klebers fixiert sind. Nach dem Aushärten werden die Flachspulen auf der Stirnseite 24 des Magnetfeldkonzentrators 20 ebenfalls mittels eines Klebers befestigt. Die direkt auf dem Magnetfeldkonzentrator 20 anliegende Spule 22 ist die Sendespule und die darüberliegende Spule 23 ist die Empfangsspule. Zusammen bilden sie ein Spulensystem. Zur Fixierung des Spulensystems wird mit einer Vergußmasse eine Kappe 25 gebildet. Einzelheiten sind der Figur 5a zu entnehmen. Um das Spulensystem entsprechend zu schützen, bildet ein aus einem faserverstärkten laminierten Werkstoff hergestelltes Formteil 26 den oberen Abschluß. Die elektrische Verbindung von den Sondenspulen 22,23 zur Trägerplatte 2 erfolgt über Stecker 27,27", die in entsprechenden Ausnehmungen 28,28" des Magneffeldkonzentrators 20 befestigt sind. Im Unterschied zum Stand der Technik werden die einzelnen Sonden 13,14 nicht über Schrauben mit der Trägerplatte 2 verbunden, sondern über Klemmung mittels des Rahmens 3. Dazu drückt der sich erweiternde Ausschnitt 12 des Rahmens 3 auf die beiden Anschlagsbahnen 29,30 des Magneffeldkonzentrators 20.

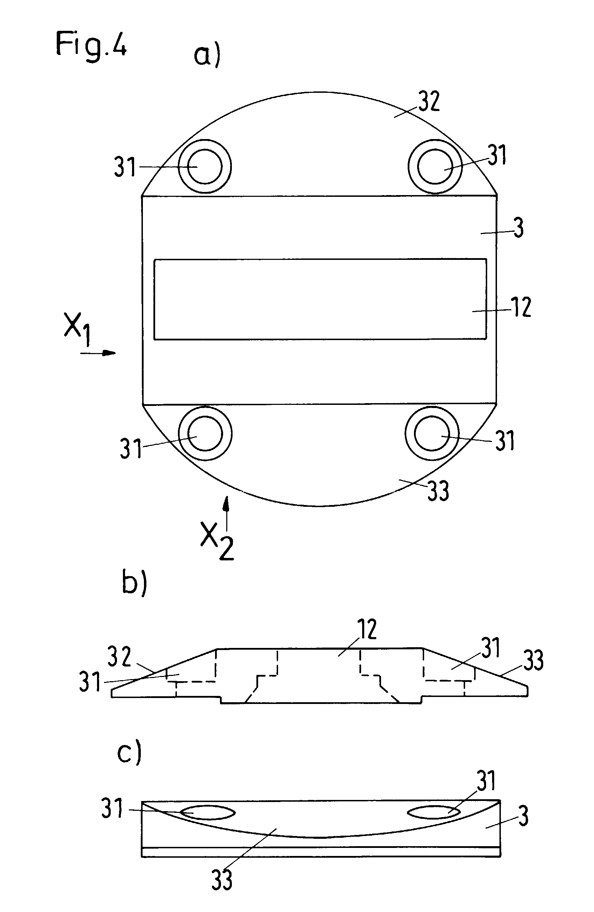

Figur 4 zeigt als Einzelteil den Rahmen 3, einmal als prüfseitige Draufsicht (Teilbild a), einmal als Ansicht in Richtung X₁ (Teilbild b) und einmal als Seitenansicht in Richtung X₂ (Teilbild c). Zur Befestigung des Rahmens 3 auf der Trägerplatte 2 weist diese Bohrungen 31 auf, durch die Schrauben 9 (Figur 1) gesteckt werden. Charakteristisch für diesen weiterentwickelten Rahmen 3 sind die Anlaufschrägen 32,33, die dafür sorgen, daß bei einem großen Schlag des zu prüfenden Werkstückes der touchierende Anlauf gemildert erfolgt und harte Stöße gegen den Prüfkopf 1 vermieden werden.

In Figur 5a bis c ist die erfindungsgemäße Sonde als Einzelteil dargestellt. Charakteristisch für diese Sonde ist, daß die Verbindungsdrähte 34 von den Spulen 22,23 zu den Steckern 27,27" über eine zentrale Bohrung 21 im Magnetfeldkonzentrator 20 erfolgt. Die Einbettung der einzelnen Windungen der beiden Flachspulen 22,23 in einen Kleber ist hier nicht darstellbar, ist aber eine elegante Möglichkeit, die dünnen Drahtwindungen zu fixieren. Der Magnetfeldkonzentrator 20 besteht in an sich bekannter Weise aus einem weichmagnetischen Pulver-Verbundwerkstoff, der sich mechanisch gut bearbeiten läßt, eine ausgezeichnete Magnetisierungscharakteristik in Verbindung mit einer geringen elektrischen Leitfähigkeit aufweist. Die Anordnung von Schlitzen zur Unterdrückung von unerwünschten Wirbelströmen, wie sie beim Stand der Technik üblich sind, ist hier nicht erforderlich. In Abänderung der üblichen Praxis statt die aus einer Vergußmasse hergestellte Kappe 25 über eine aufwendige Profilierung des Magnetfeldkonzentrators 20 zu verankern, wird erfindungsgemäß vorgeschlagen, in die Schrägen Sacklochbohrungen 36 bis 36"', 37 bis 37"' vorzusehen. Bei flächenmäßig sehr großen Sonden, wie beispielsweise der im Teilbild 5c dargestelten Ovalsonde, werden zusätzlich auf der Stirnseite Sacklochbohrungen 35,35' angeordnet.

Zur Vermeidung des Aufbaus von Spannungsspitzen ist der Übergang von der Schräge zur Anschlagbahn 29,30 des Magneffeldkonzentrators 20 mit einem Radius 38,39 versehen. Diese Maßnahme erhöht die Standzeit der Sonde, da durch die Klemmung des Magnetfeldkonzentrators 20 mittels des Rahmens 3 die Flächenpressung in diesem Bereich sehr hoch ist. Die Verankerung der Stecker 27,27" in der Ausnehmung 28,28' erfolgt ebenfalls über einen Kleber, beispielsweise einen aushärtbaren Epoxyharzkleber. Im Teilbild b sind die Flachspulen 22,23 als kreisrunde Spulen dargestellt. Dies ist eine übliche Technik und bedarf keiner weiteren Erläuterung. Bedeutsamer ist die Ausbildung der Flachspulen 22,23 als Ovalspule, wie im Teilbild c dargestellt. Von den Platzverhältnissen her entspricht dabei grob gesehen eine Ovalspule zwei Rundspulen. Der Vorteil dabei ist, daß nur ein, wenn auch größerer Sondenkörper, erforderlich ist. Viel stärker ins Gewicht fällt aber der Wegfall eines zusätzlichen elektrischen Anschlusses sowie die dazugehörige elektronische Steuerung für die ansonsten übliche zweite Rundspule. Dabei ist der Aufwand für die Anbringung zusätzlicher Sacklochbohrungen 36",36"',37",37"' nahezu vernachlässigbar. Für einen Prüfkopf mit beispielsweise einer Bestückung von vier Rundspulen bedeutet diese neue Technik die Anordnung von nur noch zwei Ovalspulen mit einer drastischen Verringerung der gesamten elektrischen Verknüpfung und der dazugehörigen elektronischen Ansteuerung.

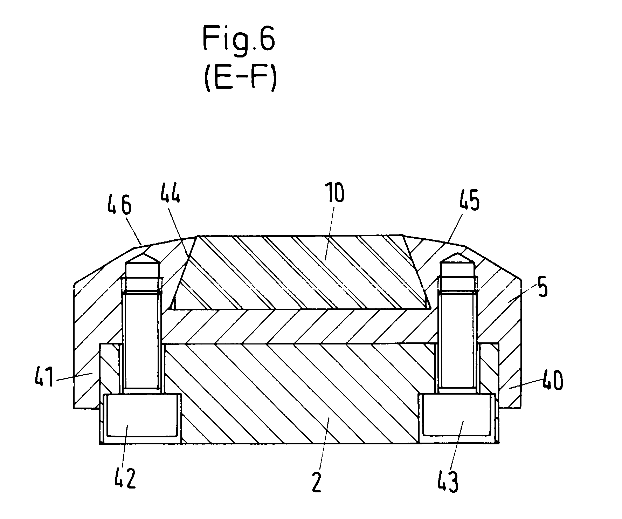

Figur 6 zeigt in einem Schnitt E-F die Einzelheit der Anordnung des Gleitsteines 10. Gut zu erkennen ist, daß das Formstück 5 mit Wangen 40,41 die Trägerplatte 2 umfaßt und mittels der Schrauben 42,43 fest mit dieser verbunden ist. Die Ausnehmung 44 im Formstück 5 ist schwalbenschwanzförmig ausgebildet. Dadurch ist der Gleitstein 10 form- und kraftschlüssig mit dem Formstück 5 verbunden und kann trotzdem in einfacher Weise durch Herausziehen ausgewechselt werden. Entsprechend Figur 1 bzw. Figur 2 muß dazu die Haltescheibe 7 bzw. 8 abgeschraubt werden. Vergleichbar wie der Rahmen 3 weisen auch die Formstücke 4 bzw. 5 eine Anlaufschräge 45,46 auf. Dies hat den Vorteil, daß bei einem abgenutzten Gleitstein 10 auch das Formstück 5 bzw. 4 selbst für eine Weile die Funktion eines Gleitsteines übernehmen kann. Da das Formstück 5 bzw. 4 unabhängig von den übrigen Elementen des Prüfkopfes 1 mittels der Schrauben 42,43 demontierbar ist, bereitet die Auswechslung des Formstückes 4 bzw. 5 keinerlei Probleme.

## Patentansprüche

1. Prüfkopf zur zerstörungsfreien Prüfung von relativ dazu sich bewegenden Werkstücken mit mindestens einer auf einer Trägerplatte angeordneten Sonde, die aus einem einen rechteckigen Querschnitt mit trapezförmigen Schrägen aufweisenden Magnetfeldkonzentrator besteht, auf deren dem Werkstück zugewandten Flachseite mittels einer eine Kunststoffkappe bildenden Vergußmasse ein aus einer übereinanderliegenden Sende- und Empfangsspule bestehendes Spulensystem befestigt ist, deren Drähte über im Magnetfeldkonzentrator angebrachten Bohrungen mit an der Unterseite des Magnetfeldkonzentrators angeordneten Steckern verbunden sind und die Mantelfläche der Sonde von einem mit der Trägerplatte verbindbaren Rahmen umgeben ist und im sondenfreien Endenbereich des Prüfkopfes in einer mit der Trägerachse lösbar verbundenen Halterung je ein in der Höhe verstellbarer und in der Halterung verschiebbarer großflächiger Gleitstein angeordnet ist und in dem Ausschnittbereich des Rahmens der Endenbereich der Sonde hineinragt und die dem Werkstück zugewandte Stirnseite der Sonde mit einem Verschleißschutzelement abgedeckt ist, das genau bündig liegt mit der dem Werkstück zugewandten Fläche des Rahmens, gekennzeichnet durch die Kombination folgender Merkmale:
a) Der Magnetfeldkonzentrator (20) besteht aus einem an sich bekannten weichmagnetischen Pulververbundwerkstoff mit geringer elektrischer Leitfähigkeit.
b) Das Verschleißschutzelement (26) besteht in an sich bekannter Weise aus einem faserverstärkten laminierten Werkstoff und ist als separates Formteil mit einem hutförmigen Querschnitt ausgebildet.
c) Die Schrägen und gegebenenfalls die dem Werkstück zugewandte Stirnfläche des Magneffeldkonzentrators (20) weisen mindestens je eine Sacklochbohrung (35,35', 36-36"', 37-37"') auf.
d) Die Sonde(n) (13,14) sowie das Verschleißschutzelement (26) werden mittels des Rahmens (3) auf der Trägerplatte (2) zur Anlage gebracht und fixiert.
e) Die Halterung ist als Formstück (4,5) aus Metall ausgebildet, das eine dem einen schwalbenschwanzförmigen Querschnitt aufweisenden Gleitstein (10,11) entsprechende Ausnehmeung aufweist und die äußere Kontur des Formstückes (4,5) so ausgebildet ist, daß es einen bündigen Abschluß zum Rahmen (3) bildet.

2. Prüfkopf nach Anspruch 1,
dadurch gekennzeichnet,
daß die Spulen (22,23) des Spulensystems in der Draufsicht ovalförmig sind.

3. Prüfkopf nach Anspruch 1 oder 2,
dadurch gekennzeichnet,
daß auf einem langgestreckten Magnetfeldkonzentrator (20) mehrere nebeneinanderliegende Spulensysteme angeordnet sind.

4. Prüfkopf nach einem der Ansprüche 1 bis 3,
dadurch gekennzeichnet,
daß das Spulensystem unterschiedlich große Sende- und Empfangsspulen aufweist.

5. Prüfkopf nach Anspruch 4,
dadurch gekennzeichnet,
daß das Spulensystem eine große Sendespule und zwei kleinere Empfangsspulen aufweist.

6. Prüfkopf nach den Ansprüchen 1 bis 5,
dadurch gekennzeichnet,
daß die Empfangsspule (23) des Spulensystems ebenso wie die Sendespule (22) aus Kupferdraht gewickelt ist und in der Trägerplatte (2) ein mit dem Spulensystem verbindbarer anpaßbarer Dämpfungswiderstand angeordnet ist.

7. Prüfkopf nach Anspruch 6,
dadurch gekennzeichnet,
daß in der Trägerplatte (2) mehrere Dämpfungswiderstände mit unterschiedlicher Dämpfungscharakteristik angeordnet sind.

8. Prüfkopf nach Anspruch 7,
dadurch gekennzeichnet,
daß in Abhängigkeit vom Dämpfungswiderstand ein Abstand Sonde(13,14)Werkstück von bis zu 2,0 mm einstellbar ist.

9. Prüfkopf nach Anspruch 1,
dadurch gekennzeichnet,
daß im Querschnitt gesehen der Übergang von der Schräge auf die Anschlagsbahn (29,30) des Magneffeldkonzentrators (20) abgerundet (38,39) ist.

10. Prüfkopf nach Anspruch 1,
dadurch gekennzeichnet,
daß der Rahmen (3) im Querschnitt gesehen zwei Anlaufschrägen (32,33) aufweist.
